# EUROPÄISCHE PATENTSCHRIFT

(11) **EP 0 568 954 B1**
(45) Veröffentlichungstag und Bekanntmachung des Hinweises auf die Patenterteilung: **03.09.1997**
(21) Anmeldenummer: 93107155.9
(22) Anmeldetag: 03.05.1993
(51) Int. Cl.: G11B 23/50

(54) **Reinigungsverbund für optische und Magnetooptische Speicherplatten**
Cleaning structure for optical and magneto-optical discs
Structure de nettoyage de disques optiques et magnéto-optiques

(30) Priorität: 08.05.1992 DE 9206173 U
(43) Veröffentlichungstag der Anmeldung: 10.11.1993
(73) Patentinhaber: HOECHST AKTIENGESELLSCHAFT, 65926 Frankfurt am Main (DE)
(72) Erfinder: Reuter, Klaus, Dipl.-Ing., W-6200 Wiesbaden (DE)

(56) Entgegenhaltungen:
- EP-A- 0 417 726
- US-A- 4 359 798
- US-A- 4 510 640
- US-A- 4 820 558

## Beschreibung

Die Erfindung betrifft einen Reinigungsverbund für optische und magneto-optische Speicherplatten aus einem für eine Reinigungsflüssigkeit saugfähigen Material.

Reinigungstücher werden sowohl für das Trocken- als auch für das Naßreinigen von Speicherplatten verwendet. Für die Naßreinigung wird ein Tropfen einer Reinigungsflüssigkeit auf ein Reinigungstuch aufgebracht, wobei es sich bei der Reinigungsflüssigkeit im allgemeinen um im Wasser gelöste Alkohole handelt, denen Netzmittel, Antistatika, Tenside zugesetzt sind. Mit dem so befeuchteten Reinigungstuch wird der durch die Verschlußöffnung in der Plattenkassette hindurch zugängliche Ausschnitt der Speicherplatte von innen nach außen abgewischt, um Staub, Fingerabdrücke, elektrostatische Ladungen und dergleichen mehr zu entfernen.

Aus der EP-A-0 417 726 ist beispielsweise ein buchähnlicher Behälter bekannt, in dem eine Plattenkassette mit einer optischen Speicherplatte bei geöffnetem Verschluß gehalten ist. Der Behälter enthält eine Verschlußarretierung, um den Plattenkassetten-Verschluß zu öffnen und eine Spindel, die die optische Speicherplatte so abstützt, daß sie rotieren kann. Eine Aufsatzvorrichtung zum Drehen der Speicherplatte vereinfacht die manuelle Drehung der Speicherplatte während des Reinigungsvorganges, der mit Hilfe eines Reinigungstuches und einer Reinigungsflüssigkeit ausgeführt wird. Die Drehaufsatzvorrichtung und die Reinigungsmaterialien sind in dem buchartigen Gehäuse untergebracht.

Eine andere auf dem Markt befindliche Reinigungseinrichtung weist ein elektrisch angetriebenes Spindellager auf, auf das die zu reinigende Speicherplatte aufgesetzt wird, um während des Reinigungsvorganges elektrisch angetrieben zu rotieren. Die Reinigung geschieht in der Weise, daß ein mit der Reinigungsflüssigkeit getränktes Reinigungstuch gegen den vom Shutter freigegebenen Ausschnitt der Speicherplatte angedrückt wird. Diese Reinigungseinrichtung arbeitet vollautomatisch, in dem das Reinigungstuch bzw. das Reinigungskissen radial in Richtung des Umfanges der Speicherplatte motorisch bewegt wird, während die Speicherplatte gleichzeitig rotiert. Nähere Untersuchungen zeigen, daß bei dieser vollautomatischen Reinigungseinrichtung die Reinigungskissen sehr häufig ungleichmäßig auf der Oberfläche der zu reinigenden Speicherplatte aufliegen, so daß die Reinigung sehr ungleichmäßig erfolgt. Eine individuelle Dosierung des Andruckes des Reinigungskissens an die Speicherplatte ist nicht möglich.

Bei den bekannten Reinigungstüchern ist ein faltenfreies Anliegen an die Speicherplatte während des Reinigungsvorganges im allgemeinen gleichfalls nicht möglich, so daß die Reinigungswirkung ungleichmäßig ist, da die Berührungsfläche an der Speicherplatte infolge der Faltenbildung des Reinigungstuches nicht geschlossen ist. Die bekannten Reinigungstücher können nicht ohne Einzelverpackung bzw. Zwischenlage gelagert werden, da eine Verschmutzung der Rückseite bei Verwendung von Lösungsmittel zu einer Verschmutzung der Reinigungsseite der Tücher führt.

Aufgabe der Erfindung ist es, einen Reinigungsverbund so auszugestalten, daß ein faltenfreies Anliegen des Reinigungsverbundes an der Speicherplatte und ein gleichmäßiger Anpreßdruck, der den Anforderungen angepaßt werden kann, gewährleistet sind.

Diese Aufgabe wird erfindungsgemäß durch einen Reinigungsverbund in der Weise gelöst, daß er aus einem rechteckigen Streifen aus einem Stofftuch und einer deckungsgleichen Kunststoffolie besteht und daß das Stofftuch und die Kunststoffolie entlang den sich gegenüberliegenden Schmalseiten miteinander verbunden sind.

In Ausgestaltung der Erfindung besteht das Stofftuch aus einem fuselfreien Reinraumstoff, gefertigt aus Endlosgarn.

Die weitere Ausgestaltung der Erfindung ergibt sich aus den Merkmalen der Schutzansprüche 3 bis 11.

Für den Reinigungsvorgang werden die Enden des Reinigungsverbundes so zusammengedrückt, daß dieser mit dem Stofftuch nach außen bogenförmig gekrümmt ist. Wegen der Elastizität der Kunststoffolie wird der Vorteil erzielt, daß das Stofftuch gegen die Kunststoffolie faltenfrei anliegt und daher auch vollflächig mit der Speicherplatte während der Reinigung in Kontakt steht.

Dadurch ist sichergestellt, daß eine Reinigung ohne Streifenbildung erfolgt. Der aufgebrachte Anpreßdruck bleibt durch die Elastizität der Kunststoffolie weitgehend konstant und kann den Erfordernissen durch die manuelle Führung des Reinigungsverbundes jederzeit angepaßt werden.

Von Vorteil ist auch, daß der Großteil der zur Verfügung stehenden Fläche des Reinigungsverbundes abschnittsweise genutzt werden kann, so daß der Nutzungsgrad sehr hoch ist.

Die Erfindung wird im folgenden anhand eines zeichnerisch dargestellten Ausführungsbeispiels näher erläutert. Es zeigt:
- Figur 1: in perspektivischer Ansicht einen Schnitt durch einen Reinigungsverbund nach der Erfindung,
- Figur 2: einen bogenförmig gekrümmten Reinigungsverbund nach Figur 1,
- Figur 3: den Reinigungsverbund mit seinen beiden Schmalseiten aufeinander zugeschoben.

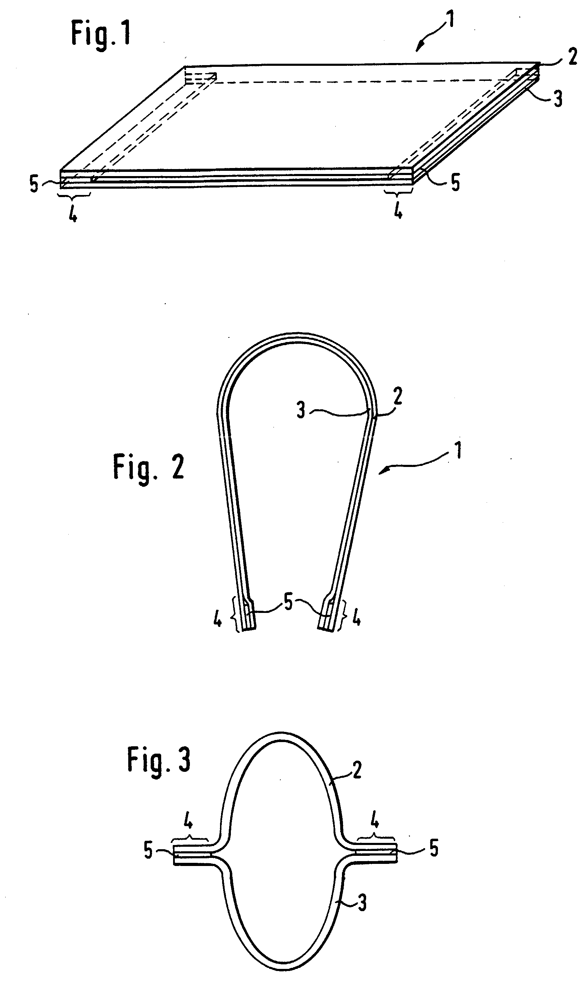

In Figur 1 ist ein Reinigungsverbund 1 nach der Erfindung in perspektivischer Schnittansicht dargestellt. Der Reinigungsverbund besteht aus einem rechteckigen, streifenförmigen Stofftuch 2 und einer deckungsgleichen Kunststoffolie 3 aus einem elastischen Kunststoff mit einer Dicke bis zu 0,50 mm. Ein geeigneter Kunststoff ist beispielsweise eine PVC-Hartfolie mit einer Dicke von 0,15 mm. Das Stofftuch 2 und die Kunststoffolie 3 sind an den sich gegenüberliegenden Schmalseiten verschweißt oder entlang von Klebestreifen 4,4 mit Hilfe eines Klebebandes 5 miteinander verklebt. Das Stofftuch 2 ist absolut fuselfrei und besteht aus einem sogenannten Reinraumstoff, der aus Endlosgarn gefertigt ist. Da das Stofftuch 2 und die Kunststoffolie 3 nur an zwei Rändern, d.h. an ihren Schmalseiten, verschweißt oder über das Klebeband miteinander verbunden sind und im letzteren Fall keine vollflächige Verklebung vorliegt, besteht auch keine Gefahr, daß die auf das Stofftuch aufgebrachte Reinigungsflüssigkeit den Kleber angreifen und auflösen könnte. Die Kunststoffolie 3 besitzt eine hohe Elastizitätskonstante und sorgt dafür, daß bei einer bogenförmigen Krümmung des Reinigungsverbundes das Stofftuch faltenfrei an der Kunststoffolie infolge der von dieser ausgeübten Zugspannung anliegt. Der Reinigungsverbund kann auch mit einem kürzeren Stoffbelag als die Kunststoffolie ausgerüstet sein, da der Anfaßbereich des Verbundes nicht mit Textilien belegt sein muß. Der Stoffbelag ist dann entlang seinen Schmalseiten mit der Kunststoffolie durch Verschweißen oder durch Verkleben mittels eines Klebebandes entlang von Klebestreifen verbunden.

Das Stofftuch 2 ist im allgemeinen bis zu einer Temperatur von 100 °C waschbar und ist im übrigen dekontaminierbar und besitzt eine große Saugfähigkeit für die Reinigungsflüssigkeit. Für den Reinraumstoff des Stofftuches 2 wird im allgemeinen ein Endlosgarn mit 60 - 80 Gew % Polyester und dem Rest Nylon verwendet, insbesondere besteht der Reinraumstoff aus 70 Gew % Polyester und 30 Gew % Nylon. Das Flächengewicht des Reinraumstoffes beträgt zwischen 160 und 180 g/m², insbesondere 170 g/m².

Die Länge des rechteckigen Streifens aus dem Stofftuch und der deckungsgleichen Kunststoffolie liegt im Bereich von 50 bis 70 mm und die Breite beträgt 20 bis 35 mm. In einer bevorzugten Ausführungsform beträgt die Länge des Reinigungsverbundes 60 mm und die Breite 30 mm. Die Breite ist der Plattenkassettenöffnung der zu reinigenden Platte angepaßt. Die Breite der Klebestreifen 4,4 wird mit etwa 5 mm gewählt.

Das Klebeband 5 besteht aus einem Trägermaterial, beispielsweise einer transparenten PVC-Folie mit einer Dicke von 0,09 mm. Der auf beiden Seiten des Klebebandes 5 aufgebrachte Klebestoff ist beispielsweise ein Synthesekautschuk. Die Reißfestigkeit des Klebebandes 5 beträgt bis zu 80 N/25 mm Breite, die Bruchdehnung 40 % und die Temperaturbeständigkeit liegt für eine Dauerbelastung bei 45 °C, und für eine kurzzeitige Stoßbelastung kann sie bis zu 65 °C betragen.

In Figur 2 ist schematisch die Gestalt des Reinigungsverbundes 1 in seinem Arbeitszustand dargestellt. Hierzu werden die Enden bzw. die Schmalseiten des Reinigungsverbundes 1 zusammengeführt, so daß sich der Reinigungsverbund auf Grund der Elastizität der Kunststoffolie 3, die innen zu liegen kommt, bogenförmig krümmt. Das Stofftuch 2 liegt faltenfrei auf der Kunststoffolie 3 auf und wird mit einem oder mehreren Tropfen Reinigungsflüssigkeit getränkt.

Danach kann der Reinigungsvorgang stattfinden, in dem der gekrümmte Reinigungsverbund über die Speicherplatte radial von innen nach außen mit kontrolliertem Anpreßdruck geführt wird. Sobald die Kontaktfläche des Stofftuches 2 von der Speicherplatte verschmutzt ist, wird der Reinigungsverbund so zusammengefaltet, daß nunmehr eine frische, saubere Kontaktfläche an der Speicherplatte anliegt. Selbstverständlich liegen dann die beiden Enden bzw. Schmalseiten des Reinigungsverbundes 1 nicht mehr auf gleicher Höhe, wie dies in Figur 2 gezeigt ist, sondern weisen eine zueinander vertikal versetzte Lage auf. Auf diese Weise ist es möglich, den größten Teil der zur Verfügung stehenden Kontaktfläche bzw. Reinigungsfläche des Reinigungsverbundes 2 zwischen den Klebestreifen 4,4 für die Reinigung zu nutzen.

In Figur 3 ist schematisch ein Reinigungsverbund 1 dargestellt, bei dem die beiden Enden bzw. Schmalseiten mit den Klebestreifen 4,4 gegeneinander geschoben sind, so daß auf Grund der Elastizität der Kunststoffolie 3 diese sich nach unten krümmt, während das Stofftuch 2 eine ähnliche Krümmung nach oben ausführt. Diese Figur 3 soll nur veranschaulichen, daß durch die Elastizität der Kunststoffolie 3 das mit ihr verklebte Stofftuch in jeder Lage außerhalb der Ruhelage unter Zugspannung steht.

## Patentansprüche

1. Reinigungsverbund für optische und magnetooptische Speicherplatten aus einem für eine Reinigungsflüssigkeit saugfähigen Material, dadurch gekennzeichnet, daß er aus einem rechteckigen Streifen aus einem Stofftuch (2) und einer deckungsgleichen Kunststoffolie (3) besteht und daß das Stofftuch und die Kunststoffolie entlang den sich gegenüberliegenden Schmalseiten miteinander verbunden sind.

2. Reinigungsverbund nach Anspruch 1, dadurch gekennzeichnet, daß das Stofftuch (2) aus einem fuselfreien Reinraumstoff, gefertigt aus Endlosgarn, besteht.

3. Reinigungsverbund nach Anspruch 2, dadurch gekennzeichnet, daß der Reinraumstoff 60 bis 80 Gew % Polyester und den Rest Nylon enthält.

4. Reinigungsverbund nach Anspruch 3, dadurch gekennzeichnet, daß der Reinraumstoff 70 Gew % Polyester und 30 Gew % Nylon aufweist.

5. Reinigungsverbund nach Anspruch 3, dadurch gekennzeichnet, daß das Flächengewicht des Reinraumstoffes zwischen 160 und 180 g/m², insbesondere 170 g/m² beträgt.

6. Reinigungsverbund nach Anspruch 1, dadurch gekennzeichnet, daß die Kunststoffolie (3) aus einem elastischen Kunststoff mit einer Dicke bis zu 0,50 mm, insbesondere 0,15 mm besteht.

7. Reinigungsverbund nach Anspruch 1, dadurch gekennzeichnet, daß das Stofftuch (2) und die Kunststoffolie (3) entlang ihren Schmalseiten miteinander verschweißt bzw. entlang von Klebestreifen (4,4) mittels eines Klebebandes (5) miteinander verklebt sind.

8. Reinigungsverbund nach Anspruch 1, dadurch gekennzeichnet, daß das Stofftuch kürzer als die Kunststoffolie ist und daß das Stofftuch entlang seinen Schmalseiten mit der Kunststoffolie verbunden ist.

9. Reinigungsverbund nach Anspruch 1, dadurch gekennzeichnet, daß die Länge des rechteckigen Streifens aus dem Stofftuch und der Kunststoffolie 60 mm, die Breite 30 mm und die Breite der Klebestreifen (4,4) 5 mm beträgt.

10. Reinigungsverbund nach Anspruch 9, dadurch gekennzeichnet, daß das Trägermaterial des Klebebandes (5) eine transparente PVC-Folie mit einer Dicke von 0,09 mm ist, und daß der Klebestoff auf beiden Seiten des Klebebandes (5) ein Synthesekautschuk ist.

11. Reinigungsverbund nach Anspruch 10, dadurch gekennzeichnet, daß die Reißfestigkeit des Klebebandes (5) bis zu 80 N/25 mm Breite, die Bruchdehnung 40 % und die Temperaturbeständigkeit dauernd 45 °C und kurzzeitig bis zu 65 °C betragen.

## Claims

1. A cleaning composite for optical and magneto-optical storage disks, composed of a material capable of absorbing a cleaning liquid, characterized in that said composite comprises a rectangular strip of a fabric cloth (2) and a plastics film(3) of the same shape and size and that the fabric cloth and the plastics film are connected to one another along the opposite narrow sides.

2. The cleaning composite as claimed in claim 1, characterized in that the fabric cloth (2) comprises a fluff-free clean-room material produced from filament yarn.

3. The cleaning composite as claimed in claim 2, characterized in that the clean-room material contains 60 to 80 % by weight of polyester, the remainder being nylon.

4. The cleaning composite as claimed in claim 3, characterized in that the clean-room material contains 70 % by weight of polyester and 30 % by weight of nylon.

5. The cleaning composite as claimed in claim 3, characterized in that the weight per unit area of the clean-room material is between 160 and 180 g/m², in particular 170 g/m².

6. The cleaning composite as claimed in claim 1, characterized in that the plastics film (3) comprises an elastic plastic having a thickness of up to 0.50 mm, in particular 0.15 mm.

7. The cleaning composite as claimed in claim 1, characterized in that the fabric cloth (2) and the plastics film (3) are welded to one another along their narrow sides or adhesively bonded to one another by means of a self-adhesive tape (5) along adhesive strips (4,4).

8. The cleaning composite as claimed in claim 1, characterized in that the fabric cloth is shorter than the plastics film, and the fabric cloth is connected along its narrow sides to the plastics film.

9. The cleaning composite as claimed in claim 1, characterized in that the length of the rectangular strip of the fabric cloth and the plastics film is 60 mm, the width is 30 mm and the width of the adhesive strips (4,4) is 5 mm.

10. The cleaning composite as claimed in claim 9, characterized in that the substrate material of the self-adhesive tape (5) is a transparent PVC film having a thickness of 0.09 mm, and that the adhesive on both sides of the self-adhesive tape (5) is a synthetic rubber.

11. The cleaning composite as claimed in claim 10, characterized in that the tensile strength of the self-adhesive tape (5) is up to 80 N/25 mm width, the elongation at break is 40 % and the heat resistance is 45 °C for continuous exposure and up to 65 °C for short-time exposure.

## Revendications

1. Ensemble composite de nettoyage pour des disques optiques et magnéto-optiques réalisés en un matériau apte à aspirer un liquide de nettoyage, caractérisé en ce qu'il est constitué d'une bande rectangulaire formée d'une étoffe (2) et d'une feuille de matière plastique (3) disposée en recouvrement et que l'étoffe et la feuille de matière plastique sont reliées entre elles le long des petits côtés opposés.

2. Ensemble composite de nettoyage selon la revendication 1, caractérisé en ce que l'étoffe (2) est formée d'un tissu pour salle blanche ne contenant pas de floches et est formée d'un fil sans fin.

3. Ensemble composite de nettoyage selon la revendication 2, caractérisé en ce que le tissu pour salle blanche contient 60 à 80 % en poids de polyester, le reste étant formé de Nylon.

4. Ensemble composite de nettoyage selon la revendication 3, caractérisé en ce que le tissu pour salle blanche comporte 70 % en poids de polyester et 30 % en poids de Nylon.

5. Ensemble composite de nettoyage selon la revendication 3, caractérisé en ce que le poids spécifique du tissu pour salle blanche est compris entre 160 et 180 g/m², et notamment est égal à 170 g/m².

6. Ensemble composite de nettoyage selon la revendication 1, caractérisé en ce que la feuille de matière plastique (3) est constituée par une matière plastique élastique ayant une épaisseur atteignant jusqu'à 0,50 mm et égale notamment à 0,15 mm.

7. Ensemble composite de nettoyage selon la revendication 1, caractérisé en ce que l'étoffe (2) et la feuille de matière plastique (3) sont soudées entre elles le long de leurs petits côtés ou sont collées entre elles le long de bandes adhésives (4, 4) moyennant l'utilisation d'un ruban adhésif (5).

8. Ensemble composite de nettoyage selon la revendication 1, caractérisé en ce que l'étoffe est plus raccourcie que la feuille de matière plastique et que l'étoffe est réunie à la feuille de matière plastique le long de ses petits côtés.

9. Ensemble composite de nettoyage selon la revendication 1, caractérisé en ce que la longueur de la bande rectangulaire formée par l'étoffe et la feuille de matière plastique est égale à 60 mm, sa largeur est égale à 30 mm et la largeur des bandes adhésives (4, 4) est égale à 5 mm.

10. Ensemble composite de nettoyage selon la revendication 9, caractérisé en ce que le matériau de support du ruban adhésif (5) est une feuille de PVC transparente possédant une épaisseur de 0,09 mm et que l'adhésif présent sur les deux faces du ruban adhésif (5) est un caoutchouc synthétique.

11. Ensemble composite de nettoyage selon la revendication 10, caractérisé en ce que la résistance au déchirement du ruban adhésif (5) atteint jusqu'à 80 N/25 mm de largeur, que l'allongement à la rupture est égal à 40 % et que la résistance à la température est donnée pour une élévation de température permanente à 45°C et pour une élévation de température jusqu'à 65°C pendant un bref intervalle de temps.
